# EUROPEAN PATENT APPLICATION

(11) **EP 1 359 689 A1**
(43) Date of publication of application: **05.11.2003**
(21) Application number: 02291110.1
(22) Date of filing: 02.05.2002
(51) Int. Cl.: H04J 3/06, H04N 7/173, H04J 3/16, H04H 1/00

(54) **Interactive network adapter for a CATV network**

(71) Applicant: Thomson Licensing S.A., 92648 Boulogne Cedex (FR)
(72) Inventor: Burguiere, Guillaume, 35135 Chantepie (FR); Adam, Franck, 35000 Rennes (FR); Bassi, Thierry, 35340 Liffre (FR)
(74) Representative: Schäferjohann, Volker Willi, Dipl.-Phys.

(57) **Abstract**

The invention deals with the establishment and modification of connections between network interface units (11) such as a cable modem and a head-end (12) at the cable operator's side. There is already specified a return channel in the DVB standard. In this specification there is a process specified named sign-on procedure, which is always performed after an upstream frequency/channel change. During this sign-on procedure on the terminal side the synchronisation in time and the power level adjustment are the main tasks to be performed. For the synchronisation in time a so-called ranging process is specified in which the network stations send a sign-on response message on a fixed time slot (RS2). The interactive network adapter (INA) measures the propagation delay of this sign-on response message and calculates a compensation. In order to be able to measure the delay it is defined in the standard, that the three time slots (RS1 to RS3) inclusive and around the fixed time slot (RS2) are reserved for ranging, i.e. non of the ranging slots (RS1 to RS3) can be used for slot allocation for data transmissions.

According to the invention the interactive network adapter (INA) comprises means that exclude one or more of the slots (ARS1, ARS2) aside of the ranging region (RS) from the allocation process. This extends the ranging region (RS) so that wider networks can be created without the need of further clustering. The invention saves high cost for network clustering.

## Description

The invention relates to an interactive network adapter for a cable TV distribution system.

### Background

The present invention relates to subscriber networks, such as broadband cable television networks, and more particularly to improvements relating to establishing/ modifying a connection between a subscriber station/ terminal/set-top box, often called network interface unit and a central station of the network, which is often called a head-end or interactive network adapter. The invention is particularly suitable for use with networks with subscriber terminals/set-top boxes that use two-way modems, such as cable modems, that are connected to the network. Such modems are increasingly being used to allow network users to send and receive data, e.g. for Internet access, at relatively high speed. The modems may also provide telephone/telefax capabilities as well as television programme related interactivity data. The invention is also used generally for terminals that have an upstream signalling capability via the network e.g. to a network head end. When talking about upstream data transmissions, it is meant that data packets are sent from the subscriber station (cable modem, set-top box equipped with a cable modem, or the like) to the central station/head-end at the cable operator side. Respectively the downstream data transmission direction is the opposite i.e. data packets are transmitted from the central station at the cable operator side to the subscriber stations.

With the term cable modem, a modem is referred to that operates over the ordinary cable TV network cables. Basically, the cable modem is just connected to the TV outlet for the cable TV and the cable TV operator connects a cable modem termination system at the head-end (the cable company main office).

The term cable modem termination system is used in the DOCSIS return channel system used in US and describes the vital component that cable operators must install at the head-end. A CMTS instructs a cable modem when to transmit signals upstream and which channels to use. A CMTS demodulates upstream signals, translates them back into IP packets and redirects them to a sample switch. The sample switch redirects the IP packets to an IP router for transmission across the Internet. In the opposite direction it modulates downstream signals for transmission across the Hybrid Fibre Coax (HFC) cables to the subscribers homes. One CMTS will normally provide support for up to thousand simultaneous cable modem subscribers across a single 6 MHz channel. If more cable modems are required, adding more channels to the CMTS increases the number of possible subscribers.

To further explain the often-used terms upstream and downstream signals the following explanation is given. Downstream signals from the head-end are broadcast to all cable modem subscribers on the same network. Each cable modem filters the signals it needs from the stream of signals. In the upstream direction every cable modem is trying to place a different signal onto the network that will eventually share the same piece of transmission spectrum. Therefore, any form of access method is required to regulate which signal is actually carried. Access methods come in different varieties, such as Time or Frequency Division Multiple Access (TDMA or FDMA), Asynchronous Transfer Mode (ATM), Carrier Sense Multiple Access/Collision Detection (CSMA/CD) etc. which method is appropriate depends on the expected application (TV, Internet, phone).

There are protocol layers that ensure the upstream and downstream transmission of signals across the same piece of transmission spectrum, of course, in an orderly and fair way. For this purpose a media access control layer (MAC) and logical link control layer (LLC) are provided. Both the CMTS and the cable modem implement these protocol layers for several reasons, which include:
1. To ensure that upstream signals from all cable modems are received.
2. To assign frequencies to cable modems so they know where to transmit signals.
3. To assign time slots to the cable modems so that they know when to transmit signals to the head-end.

Standards have already been developed for this type of data communication. They include the multimedia cable network systems (MCNS), data over cable system interface specification (DOCSIS) and the DVB interaction channel for cable TV distribution systems (CATV).

The present invention is closely related to the last mentioned part of the digital video broadcasting standard (DVB). Its full bibliographic reference is ETSI EN 200 800 digital video broadcasting (DVB): DVB interaction channel for cable TV distribution systems (CATV) from the European Telecommunications Standards Institute 2000 in F-06921 Sophia Antipolis Cedex, France. This specification will also be referenced in a corresponding ITU standard and DVB document. For clarification CATV stands for Community Antenna Television.

One particular issue of the cable return channel system is to manage the frequencies being used for communication between the terminal and the head-end. This leads to adjust (on the terminal side) the synchronisation in time and the power level used to reach the head-end (upstream communication). This individual adjustment is the so-called ranging process in which the runtime differences of the signals coming from network stations at different distances to the head end are compensated by assigning different delays to the network stations. According to the current version of the ETSI EN 200 800 standard, the adjustment procedure is done for each terminal each time it enters this network or each time the upstream frequency is changed.

In the ETSI EN 200 800 standard the ranging area for the ranging process is specified to be 3 time slots broad. This is enough for a medium sized wide area network. In urban regions where the density of population is relatively low, it may be desired to make a clustering of subscriber stations in a wider area in order to save costs for the head end equipment.

### Invention

In view of the above it is the problem of the invention to extend the ranging area for the ranging process in order to allow clustering of network stations in a wider area without the need of changing the existing ETSI standard.

The object is solved with an interactive network adapter according to claim 1 as claimed. Favourable further developments and improvements are specified in the dependent claims.

To increase the ranging area the interactive network adapter comprises means for excluding one or more time slots next to the original ranging slots from being allocated to network stations for communication with the head end. The allocation of time slots to the network station is in the sole responsibility of the interactive network adapter in the head end. Therefore, if the interactive network adapter ensures that a time slot next to the original ranging slots remains unallocated in the system, it is ensured that no collision will occur during the ranging process for one subscriber station with a data transmission of another station having assigned the time slot next to an original ranging slot.

In other words the invention provides for an increased ranging area in the system utilizing time slots that otherwise in a standard system are reserved for data communication. This slightly reduces the data transport capacity of the system. However, in an urban region with relatively low density of subscriber stations, the data transport capacity might not be the primary problem. Instead it could be more problematic to integrate subscriber stations into the system from far distances to the head end and low distances to the head end. In this situation the invention helps to save high costs for an additional network which would be necessary to install if no possibility of increasing the ranging area would exist.

In other words, with this invention, the limitation in the cable length of a network is no more existing since the limitation is now due only the number of slots reserved on both sides of a defined region. This can be used for all larger networks and typically for the beginning of a return channel deployment.

### Drawings

The present invention will be explained in more detail in connection with the enclosed drawings. In the drawings:
- Fig. 1: shows the connection of subscriber stations to a head-end at the cable operator side over a conventional broadband television cable;
- Fig. 2: shows the preferred frequency ranges for a CATV interactive system according to the DVB specification;
- Fig. 3: shows the MAC messages that are exchanged between head end and subscriber station during the sign-on process;
- Fig. 4: shows the target situation for a TDMA based communication system for a CATV distribution system;
- Fig. 5: shows the downstream and upstream frame structures for communication between head end and subscriber station;
- Fig. 6: shows an illustration of the ranging process for a network station;
- Fig. 7: shows the timing of the initial sign-on response messages of 3 possible locations of subscriber stations in the network;
- Fig. 8: shows an example of upstream transmissions for three different positioned network stations wherein the maximum distance between the network stations corresponds to the propagation time equal to two time slots;
- Fig. 9: shows the example of an upstream transmission of a network station in the system shown in Fig. 8 but having a smaller distance to the head end than the minimum distance that can be compensated by the three ranging slots thereby producing a collision with a cell transmission in a time slot next to the ranging slot; and
- Fig. 10: illustrates that the use of additional ranging slots helps to integrate further network stations in the network.

### Detailed Description of the Invention

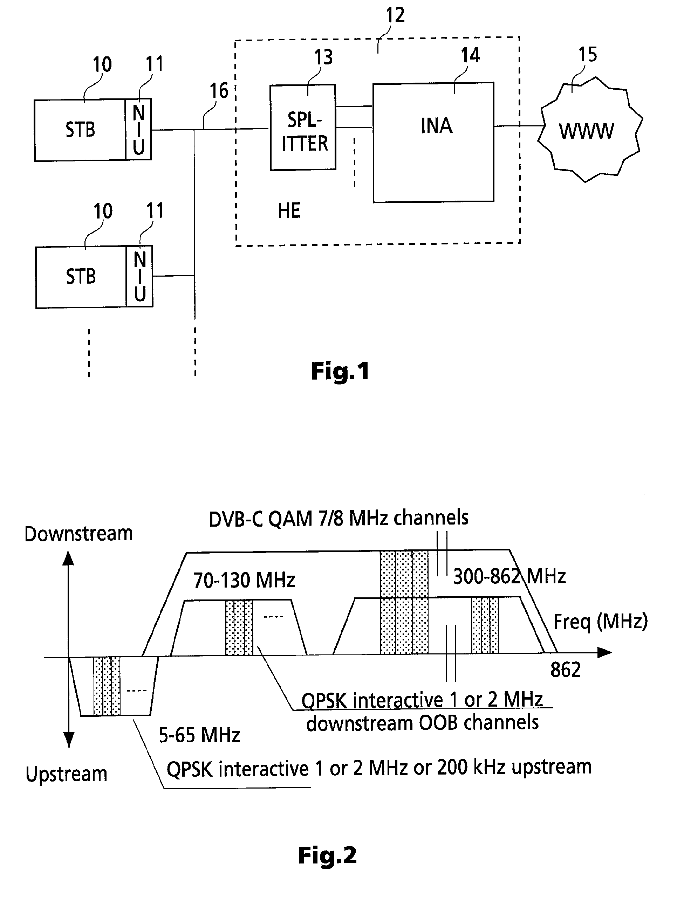

In Fig. 1 it is depicted that the number of subscriber stations are connected to a head-end via a broadband cable. The subscriber stations are set-top boxes for TV signal reception in the shown examples. Each subscriber station is equipped with a network interface unit 11. This network interface unit can be an internal or external cable modem. On the cable operators side the broadband cable 16 is terminated at the head-end. There is a signal splitter 13 in the head-end, which consists of a filter bank, which provides filters for the various downstream and upstream channels. The main component in the head-end is the interactive network adapter 14, on which the signals for the downstream transmissions are generated, separated for each downstream channel and the signals received in the upstream channels are evaluated. For Internet access, the interactive network adapter 14 is connected to the world-wide-web 15.

Fig. 2 indicates a possible spectrum allocation. This figure is part of the above-mentioned DVB specification ETSI EN 200 800. It is evident from Fig. 2 that there co-exist 30 to 300 upstream channels and up to 620 downstream channels on this cable. Evidently a high efficient implementation of the media access control layer is required to manage all the different channels. A multiple access scheme is defined in order to have different users share the same transmission media. Downstream information is broadcast to all users of the networks. Thus an address management system exists, which allows the interactive network adapter to send information single-cast to one particular user. Upstream information may come from any user in the network and shall, therefore, also be differentiated at the interactive network adapter, using the set of addresses. The manufacturer gets enough address space for addresses from an administration board. In each produced NIU (e.g. Set Top Box or Cable Modem) he programmes a unique address from this address space. This address is fixed throughout the whole "life" of the NIU and will be used for the communication between NIU and INA. For example a 6 bytes long address can be used which is equivalent to the Ethernet MAC addresses.

Within upstream channels, users send packets with TDMA-type access. This means that each channel is shared by many different users, who can either send packets with the possibility of collisions when this is allowed by the interactive network adapter or request transmission and use packets assigned by the interactive network adapter to each user specifically. Assuming that each channel can, therefore, accommodate thousands of users at the same time, all users present on the network at the same time can easily use the upstream bandwidth. The TDMA technique utilises a slotting methodology, which allows the transmit start times to be synchronised to a common clock source. Synchronising the start time increases message throughput of this signalling channel and the message packets do not overlap during transmission. The periods between sequential start times are identified as slots. Each slot is a point in time when a message packet can be transmitted over the signalling link.

The time reference for slot location is received via the downstream channels generated at the delivery system and received simultaneously by all set-top units. However, since there is a propagation delay in any transmission network, a time base ranging method accommodates deviation of transmission due to propagation delay.

The physical layer for the forward interaction path (downstream transmissions) and for the return interaction path (upstream transmissions) is fully disclosed in above mentioned DVB specification and need not be described in detail here. Also the framing for forward interaction pass and return interaction pass is described in detail there as well as the slot timing assignment. More important for the understanding of the invention is the MAC functionality. A lot of messages flow between the interactive network adapter and the network interface unit for media access control. There are three categories in which the messages can be divided: initialisation, provisioning and sign-on management; connection management; and link management. There is a procedure, which is performed during power on or reset called MAC initialisation and provisioning. This process is, of course, fully described in the DVB specification as cited. Upon an NIU becoming active (i.e. powered up), it shall first find the current provisioning frequency, which is a downstream frequency. For this purpose the NIU tunes on any of the down stream channels and waits for the provisioning channel message. This message shall be sent periodically on all downstream channels. Upon receiving this message, the NIU shall tune to the provisioning channel.

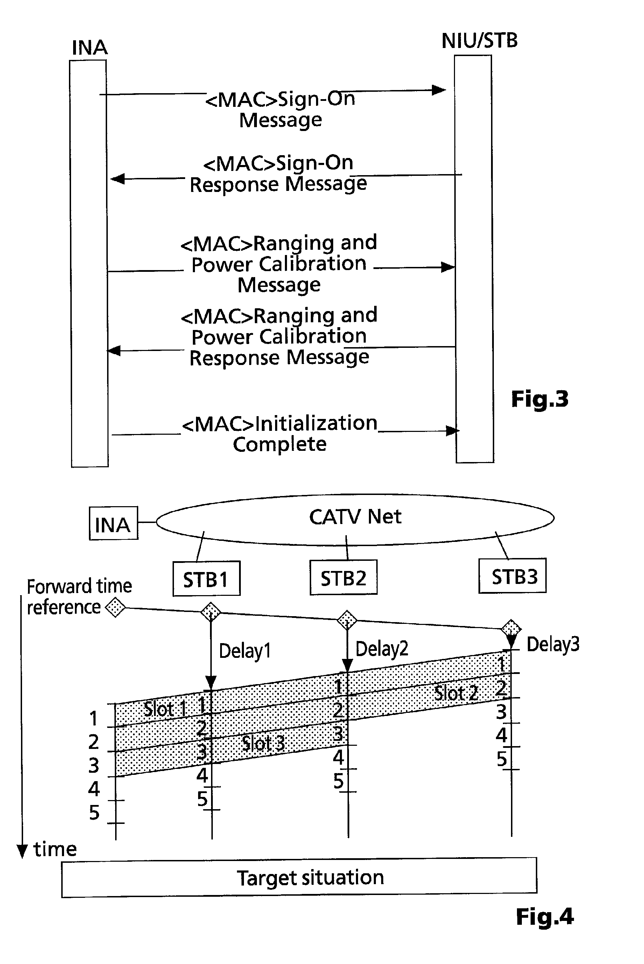

After a valid lock indication on a provisioning channel, the NIU awaits the default configuration message. When received, it shall configure its parameters as defined in the default configuration message. The default configuration parameters include default timer values, default power levels, default-retry counts as well as other information related to the operation of the MAC protocol. The NIU shall tune to the downstream provisioning channel and the upstream service channel after having received the default configuration message. On these two channels the sign-on and calibration process is performed. The NIU awaits the 'sign-on request message' from the INA entity. Upon receiving the 'sign-on request message', the NIU shall respond with 'a sign-on response message' and the sign-on response message shall be transmitted on a so-called ranging slot. The INA, upon receiving the 'sign-on response message' shall validate the NIU, by either sending an 'initialisation complete message' or a 'ranging and power calibration message'. When a 'ranging and power calibration message' is received, the NIU shall respond to the 'ranging and power calibration message' with a 'ranging and power calibration response message'. The 'ranging and power calibration response message' shall be transmitted on a ranging slot with a power level that has been corrected by a power control setting received in the 'ranging and power calibration message'. It is somehow a trial and error process for adjusting the power level during the ranging and power calibration process. There could be several attempts for adjusting the power level in the sign-on process. After having found acceptable signal strength and a good carrier to noise ratio in the 'ranging and power calibration response message', the head-end will issue an 'initialisation complete message'. The whole sign-on procedure is schematically displayed in Fig. 3.

The Time-Offset value has a length of 16 bits and is used for correcting the transmitting time point in order to compensate for the different distances of the terminals from the head-end. This parameter is also part of the ranging and power calibration method, which is already specified in the ETSI EN 200 800 standard. The Time-Offset value is a 16 bit short integer representing a relative offset of the upstream transmission timing. A negative value indicates an adjustment forward in time (later). A positive value indicates an adjustment back in time (earlier). The unit of measure is 100 ns. The ETSI EN 200 800 specification indicates that it supports a maximum cable length of approximately 80km. This invention provides a judicious use of the specification in order to manage larger cable networks. For understanding how this is being done, the TDMA system and the ranging process for determining propagation delays will be described in more detail below.

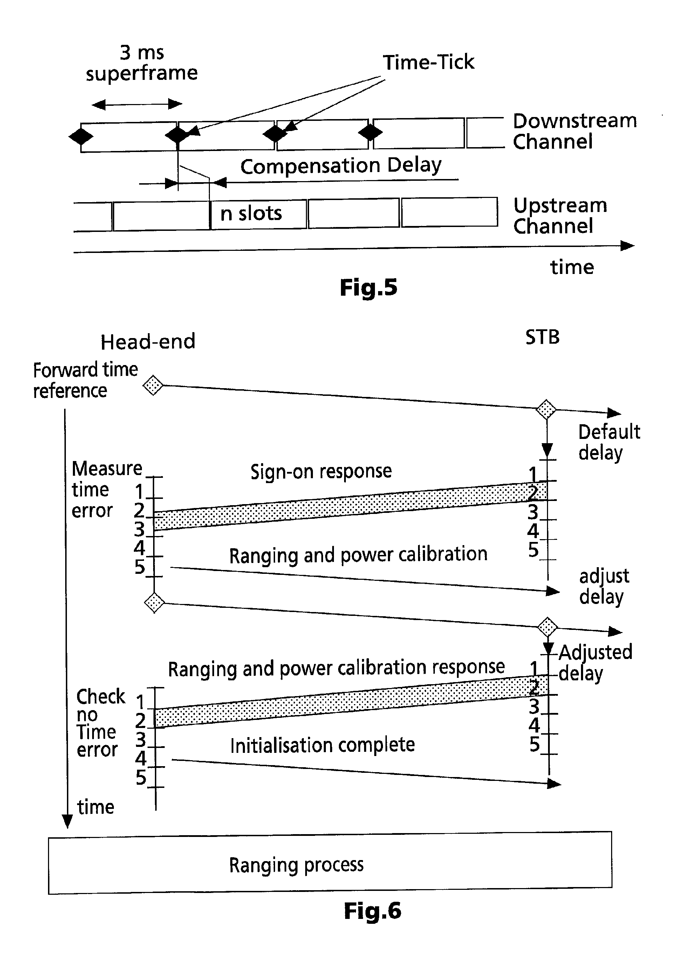

Fig. 4 shows the TDMA principle. At the top of the drawing the CATV distribution network is schematically shown. At one end of the CATV distribution network is the head end INA illustrated by a box. Network subscriber stations STB1 to STB3 also illustrated by boxes are positioned at different distances to the head end INA. The reference sign INA stands for interactive network adapter and the STB stands for set top box. In the TDMA system all the network stations need to be synchronised to one clock. This is realised by means of synchronisation messages that the head end periodically sends downstream to the network stations. In the DVB RC specification the downstream channel is divided in 3 ms periods separated by downstream time ticks. Likewise the upstream channel is also divided into 3 ms periods separated by upstream time ticks. Before a network station is going through the sign-on procedure for the first time, there will be an absolute time offset (compensation delay) between the downstream and upstream time ticks as illustrated in Fig. 5. The downstream time ticks are illustrated with small rhombuses and the upstream time ticks with small circles. It is the sign-on procedure and specifically the ranging process that measures the propagation delay and calculates a time offset value that needs to be used in the network interface adapter for synchronising the clocks.

The upstream channel may have different transmission bit rates in the DVB RC specification. Values of 1.544 Mbit/s, 3.088 Mbit/s, 6.176 Mbit/s and 256 kbit/s are allowed. E.g. in case of the 1.544 Mbit/s transmission rate a superframe consisting of 24 frames has a transport capacity of 4632 bits. A superframe is transmitted in 9 time slots of the TDMA system.

Going back to Fig. 4 it shows for the 3 network stations the different delays (time offset values) that need to be taken into account for synchronisation. When these delays are applied, the transmission of network station STB1 in slotl will be detected at the head end solely and correctly in slot1. The transmission of network station STB2 in slot2 will be detected in slot2 and the transmission of network station STB3 will be received in slot3. Therefore Fig. 3 shows how each network station must add a delay to the forward time reference, depending on its position in the network, so that all return messages re-arrange in a continuous frame at the head-end input.

Next, the time adjustment is explained in connection with Fig. 6. The Head-end makes the control of the time adjustment during the initial configuration of the terminal after Power On (called the sign-on procedure). To achieve this, it monitors the position in time of a reception of a transmission from the terminal which sends a special message (called sign-on response message) using dedicated ranging time slots. It is fixed in the ETSI EN 200 800 specification that the ranging slots are a group of 3 successive time slots. A terminal always has to send its message in the second slot of this group so that if it is not correctly calibrated in time, the head-end will receive its message in the first or third slot of the ranging slots which are never used for other messages. Evaluating reception of this message, the Head-end can correct the time position of the terminal so that the next message will be received in the second ranging slot. In the upper part of Fig. 6 it is shown that the terminal STB sends the sign-on response message in the second slot with the initial default delay value used as a first attempt for calibration. The result is that the head end receives this transmission partly in the second slot and partly in the third slot. From the measured reception time it calculates the adjustment delay value. This adjustment delay value is communicated to the terminal in a ranging and power calibration message. The terminal takes the new delay value and sends the ranging and power calibration response message with the adjusted delay value as depicted in the lower part of Fig. 6. This message is solely received in the second time slot at the head end and therefore the head end sends the initialisation complete message to the terminal to finalize the sign-on process.

From Fig. 6 it is evident why the sign-on response message must be sent in a special time slot, the second slot of the ranging slots, which is always surrounded by two reserved slots where no other terminal can send a message. As shown in Fig. 6, the sign-on response message arrives at the head-end partly in slot 2 and 3, preventing any other terminal to use both of these slots.

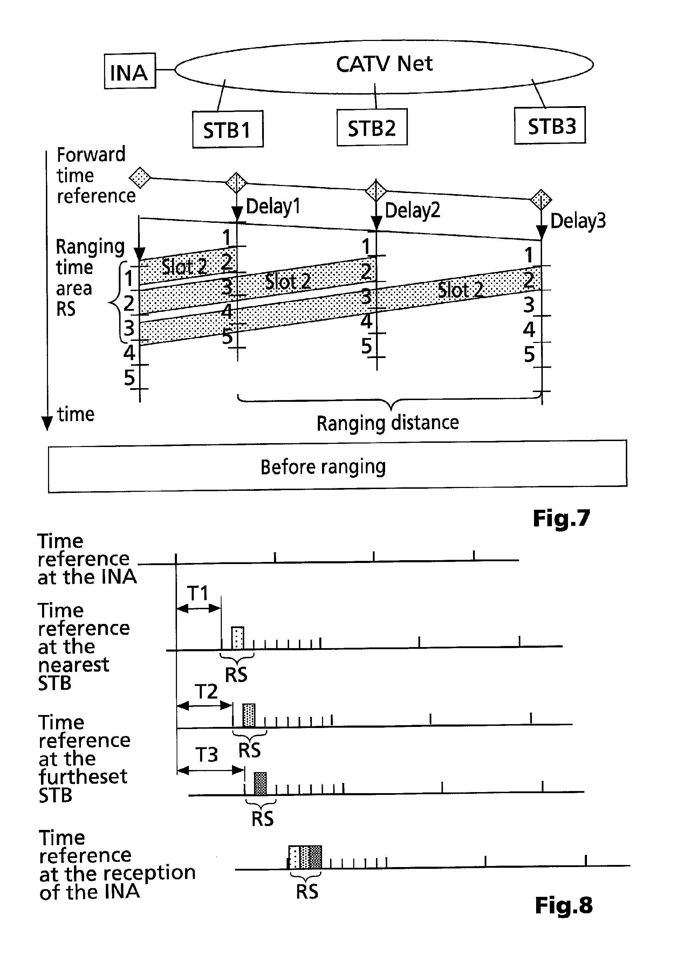

Fig. 7 shows the relation between the duration of the ranging area and the size of the cable network (distance between the closest and the furthest decoder from the head-end).

In this figure, the initial sign-on response message is drawn for 3 possible locations of terminals in the network. The ranging time area must be long enough to let the terminals having the furthest distance successfully send their sign-on message without collision. Obviously the ranging time area increases with the ranging distance. Or reversly, a defined ranging time area, as defined in the standard, limits the size of the network to a maximum value, beyond which some terminal might not be able to sign-on.

Currently, the DVB RC standard limits the individual time correction to +1 slot or -1 slot, as each ranging slot is surrounded by one reserved slot. Consequently the time to compensate between the nearest and the furthest terminals cannot exceed 2 time slots. This depends on the bit rates used for communication from the terminal to the head-end.

Fig. 8 illustrates this with a pure timing diagram. Shown is the timing situation before calibration. In this figure T1, T2, and T3 represent the different propagation delays in the cable network, i.e. :
- T1 is the smallest propagation delay which can be corrected using the defined 3 slots ranging region.
- T3 is the highest propagation delay which can be corrected using the defined 3 slots ranging region.

This means that the difference between T1 and T3 is equal to the duration of two time slots. At the bottom of Fig. 8 it is shown how the parallel transmissions of the set top boxes at the three different locations in the network re-arrange at the interactive network adapter during reception. All of the depicted transmissions will be received in the three ranging slots of the ranging region RS.

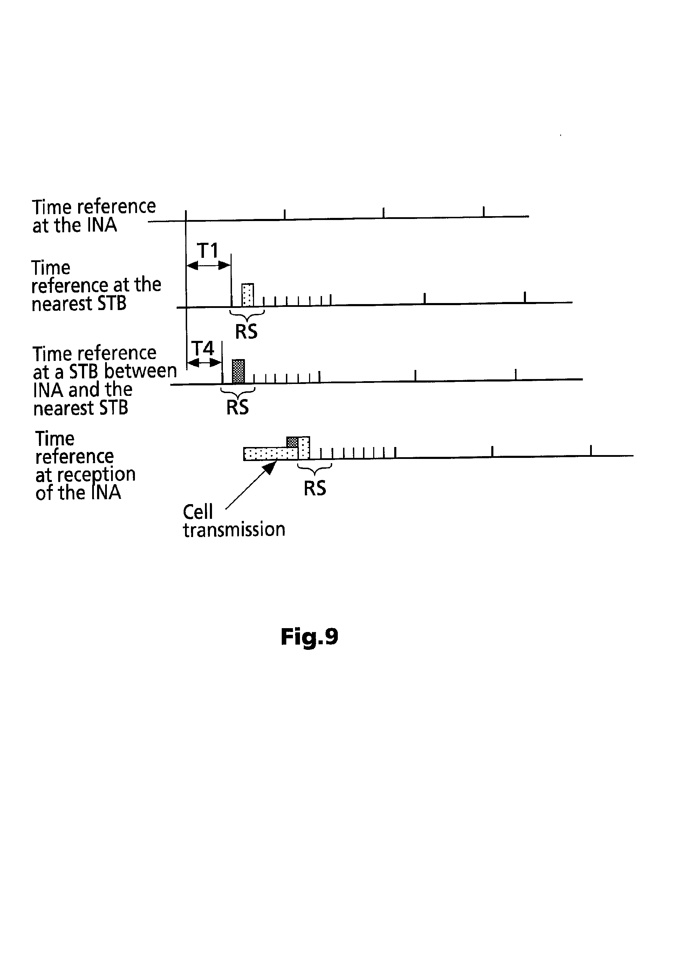

As explained above, the ETSI EN 200 800 specification only permits to define a 3 slots ranging region RS. Considering that and the content of Fig. 8, if slots previous or after the ranging region RS are used for cell transmission and if a terminal located between the interactive network adapter and the nearest terminal tries to enter the network, a collision can occur as illustrated in Fig. 9.

The idea of this invention is to manage a wider ranging zone in the Head-end. This ranging zone shall be adjusted to the maximum possible time correction according to the cable network length. This wider ranging zone is achieved by reserving more time slots around the defined ranging area. This can be implemented without any modification of the standard. According to the DVB-RC standard, any slot can be used by a network station only if the head-end has allowed the station to do so. This slot allocation is explicit or implicit, but it exists in any case. Therefore, and this is the idea of the invention, the head-end can manage not to allocate to any network station any number of time slots around the defined 3 slots ranging area. Not allocating these slots to any terminal is equivalent to reserving them for ranging purposes. Consequently, a terminal which has a time position of 3 slots in delay to the time position of the nearest terminal will have its ranging message received in the additional reserved slot at the end of the original ranging area. Likewise a terminal having a time position of 3 slots in advance of the time position of the furthest terminal will have its ranging message received in the additional reserved slot at the beginning of the ranging area. As these slots have not been allocated to any terminal a collision cannot occur and the message is correctly received.

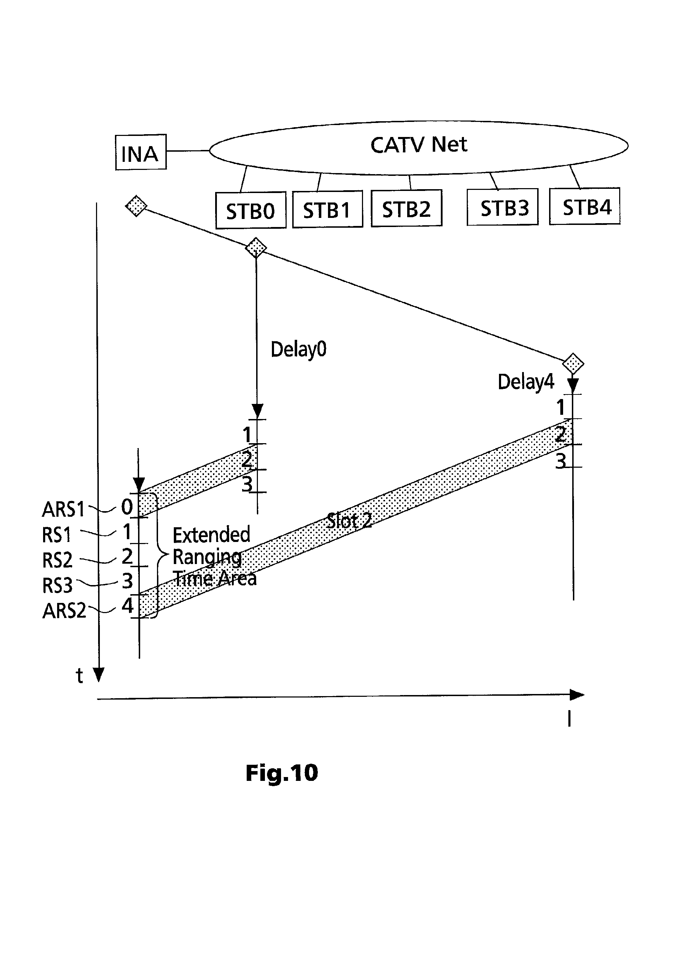

Fig. 10 shows both of these cases. The additional ranging slots ARS1 and ARS2 are positioned next to the original ranging slots RS1 to RS3. Two additional terminals STB0 and STB4 are integrated in the CATV distribution network. Terminal STB0 can be adjusted in time with delay0 so that its ranging and power calibration response message will be received in the additional ranging slot ARS1. Terminal STB4 can be adjusted in time with the value delay4 so that its ranging and power calibration response message will be received in the additional ranging slot ARS2.

Those skilled in the art will know that the reservation of time slots for ranging can easily be done by software means. The standard allocation routine needs only a simple modification. It just needs a limitation of the available slot range for slot allocation.

## Claims

1. Interactive network adapter (INA) for a CATV network, comprising ranging means for compensating runtime differences between network stations (STB1 to STB3) at different distances to the interactive network adapter (INA), wherein the TDMA method is used for communicating with the network stations (STB1 to STB3), a predetermined number of time slots (RS1 to RS3) being reserved for the ranging process, and the other time slots being available for allocation with the network stations (STB1 to STB3), **characterized in that** the interactive network adapter (INA) comprises means for excluding one or more time slots (ARS1, ARS2) next to the ranging time slots (RS1 to RS3) from the allocation to the network stations (STB1 to STB3) in order to increase the ranging area (RS) for the ranging process.

2. Interactive network adapter (INA) according to claim 1, wherein three successive time slots (RS1 to RS3) are reserved for the ranging process.

3. Interactive network adapter (INA) according to claim 1 or 2, wherein the communication with the network stations (STB1 to STB3) is done according to the DVB Interaction Channel Specification for Cable TV distribution systems.
